# EUROPEAN PATENT APPLICATION

(11) **EP 4 389 582 A1**
(43) Date of publication of application: **26.06.2024**
(21) Application number: 22315349.5
(22) Date of filing: 22.12.2022
(51) Int. Cl.: B63B 21/50, F03D 13/25

(54) **FLOATING STRUCTURE AND MOORING SYSTEM FOR AN OFFSHORE WIND TURBINE**

(71) Applicant: TotalEnergies OneTech, 92400 Courbevoie (FR)
(72) Inventor: Barrier, Philippe, 92400 Courbevoie (FR); Benhamou, Alexis, 92400 Courbevoie (FR); Le-Guennec, Stéphane, 92400 Courbevoie (FR)
(74) Representative: Innovincia

(57) **Abstract**

The present invention relates to a floating structure (3) comprising a tensioned mooring system (5) intended to moor and stabilize the floating structure (3) to the seabed (Sb),
wherein the tensioned mooring system (5) comprises at least three independent anchors (53) disposed on the seabed (Sb) and at least two tendons (52) per anchors (53) linked to the floating structure (3), each tendon (52) of the same anchor (53) having a different junction point (31) with the floating structure (3) so that the tendons (52) of the same anchor (53) are inclined on either side of a vertical plane (C) linking the anchor (53) and the center of the floating structure (3), the junction points (31) of the tendons (52) on the floating structure (3) being disposed on an inner virtual circle (A),
and wherein the tendons (52) are attached to the anchors (53) on mooring points (51) disposed on an outer virtual circle (8) coaxial with the inner virtual circle (A) and having a larger or equal diameter than the inner virtual circle (A).

## Description

### TECHNICAL FIELD:

The present invention relates to a floating structure for an offshore wind turbine. More precisely, the present invention relates to the subsea configuration and mooring of a floating structure on the seabed.

### BACKGROUND:

For the installation of an offshore wind unit, comprising a turbine and a support linked to the seabed, it is well known to use support structures, like jacket structures. Such a support structure rests on the seabed and is fixed to the ground with anchor devices. The support structure extends above the sea level to receive a wind turbine mast. Generally, this support structure is made of one piece and the greater the depth is, the higher the support structure must be. However, this solution is expensive.

Another solution to install an offshore wind unit is to use a floating structure moored to the seabed with mooring lines. This solution requires the use of a floating technology. Then, the structure of a floating offshore wind unit can be subdivided as follow:
- a turbine, corresponding to a rotor nacelle assembly (RNA), comprising blades, hub and nacelle and the tower
- a floating substructure, corresponding to the floating structure supporting the turbine
- a station keeping system, corresponding to mooring lines and anchors allowing the system to remain in place

The different types of floating substructure can be distributed in different families such as for example barge, semi-submersible, spar, tension leg platform (TLP) or keel. The particularity of the tension leg platform systems (TLP) is that the station keeping system (SKS), comprising the mooring lines and the anchors, not only prevents the structure drift, but also ensures the stability of the floating structure by tensioning the mooring lines also called tendons.

The tension leg platform systems are already well known from offshore Oil & Gas activities, the tension leg platform systems used for Oil & Gas activities all comprise bundles of one or several tendons that remain in a vertical position in a static case. With the tendons in vertical configuration, the platform always remains in a vertical position (i.e. no pitch or roll motion).

However, if the tension leg platform systems reduces the motion of the floating structure compared to other mooring systems, motions may still be observed. These movements reduce the performance and the energy production of the offshore wind unit compared to a mooring with a support linked to the seabed.

One aim of the present invention is to provide an enhanced and cheap mooring system for an offshore wind turbine.

To this end, the invention relates to a floating structure comprising a tensioned mooring system intended to moor and stabilize the floating structure to the seabed, preferably for an offshore wind turbine,
wherein the tensioned mooring system comprises at least three independent anchors disposed on the seabed and at least two tendons per anchors linked to the floating structure, each tendon of the same anchor having a different junction point with the floating structure so that the tendons of the same anchor are inclined on either side of a vertical plane linking the anchor and the center of the floating structure, the junction points of the tendons on the floating structure being disposed on an inner virtual circle,
and wherein the tendons are attached to the anchors on mooring points disposed on an outer virtual circle coaxial with the inner virtual circle and having a larger or equal diameter than the inner virtual circle.

Two adjacent tendons of two adjacent anchors could have a common junction point on the floating structure.

Two tendons of a same anchor could have the same inclination with the vertical virtual plane linking the mooring point and the center of the floating structure.

Two tendons of a same anchor could have an angle with respect to each other of maximum 45°.

The mooring points could have a regular distribution on the outer virtual circle.

The junction points of the tendons on the floating structure could have a regular distribution on the inner virtual circle.

The anchors could be permanently sealed on the seabed.

The present invention relates also to an installation method of a floating structure, preferably for an offshore wind turbine, said method comprising the steps:
- disposing of at least three anchors on the seabed and attachment of at least two tendons to each anchor on dedicated mooring points, said mooring points being disposed on an outer virtual circle,
- towing of the floating structure on site above the anchors location,
- connection of the tendons to the floating structure on dedicated junction points and tensioning the tendons, said junction points being disposed on an inner virtual circle coaxial with the outer virtual circle and having a smaller or equal diameter than the outer virtual circle.

Concerning the installation method, two adjacent tendons of two adjacent anchors could have a common junction point with the floating structure.

Concerning the installation method, the junction points of the tendons of a same anchor could be disposed on the floating structure so that two tendons of a same anchor could have the same inclination with a vertical virtual plane linking the mooring point and the center of the floating structure.

Concerning the installation method, the two tendons of a same anchor could have an angle with respect to each other of maximum 45° after connection on the floating structure.

Concerning the installation method, the mooring points could be disposed on the outer virtual circle in a regular distribution.

Concerning the installation method, the junction points of the tendons on the floating structure could be disposed on the inner virtual circle in a regular distribution.

Concerning the installation method, the anchors could be permanently sealed on the seabed during the step of disposal of the anchors on the seabed.

Further features and advantages of the invention will become apparent from the following description, given by way of non-limiting examples, with reference to the appended drawings, in which:
- Figure 1 is a side view of a schematic representation of an offshore wind unit according to a first embodiment of the present invention,
- Figure 2 is a top view of a schematic representation of the offshore wind unit of figure 1,
- Figure 3 is a top view of a schematic representation of an offshore wind unit according to a second embodiment of the present invention,
- Figure 4 is a top view of a schematic representation of an offshore wind unit according to a third embodiment of the present invention.
in these figures, identical elements bear the same reference numbers. The following implementations are examples. Although the description refers to one or more embodiments, this does not necessarily mean that each reference relates to the same embodiment or that the features apply only to a single embodiment. Individual features of different embodiments can also be combined or interchanged to provide other embodiments.

### DETAILED DESCRIPTION

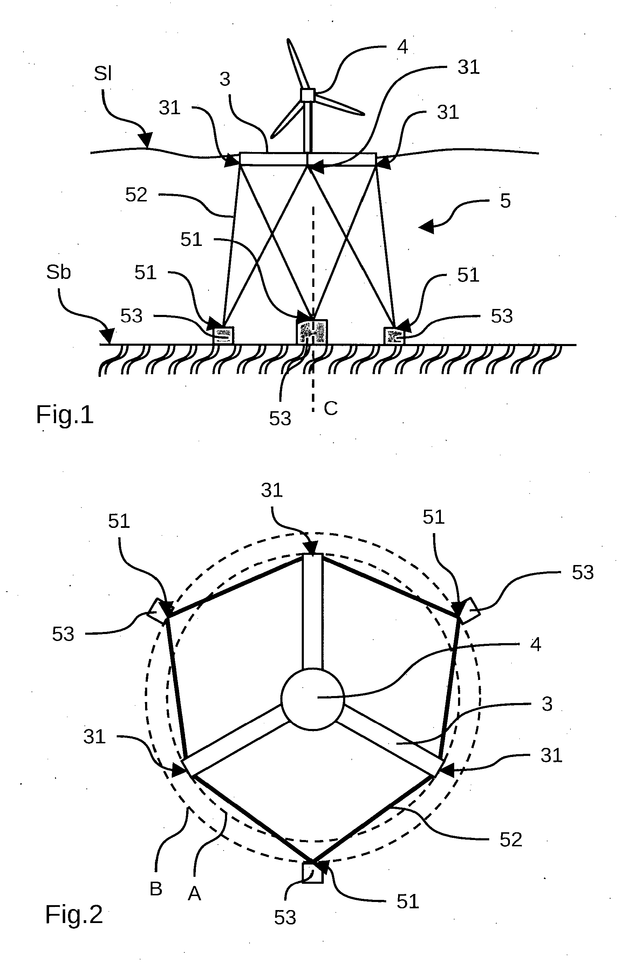

Figure 1 shows a floating structure 3. This floating structure 3 could be designed to receive a wind turbine 4 or other structures like for example an electrical sub-station for a wind farm. The floating structure 3 comprises a tensioned mooring system 5 intended to moor and stabilize the floating structure 3 to the seabed Sb. The floating structure 3 floats preferably between two waters under the sea-level SI.

The tensioned mooring system (5) comprises at least three independent anchors 53 disposed on the seabed Sb and at least two tendons 52 per anchors 53 linked to the floating structure 3. Each tendon 52 of the same anchor 53 has a different junction point 31 with the floating structure 3. This configuration causes the tendons 52 of the same anchor 53 to be inclined on either side of a vertical plane C linking the anchor 53 and the center of the floating structure 3,.

The tendon 52 could be for example a metallic cable or a synthetic rope linking a junction point 31 to a mooring point 51 on the anchor 53. The tendon 52 could also be a metallic chain attached to a junction point 31 on the floating structure 3 and to a mooring point 51. The tendons 52 are tensioned in order to limits the relative movements of the floating structure 3.

The anchors 53 could be for example steel piles driven into the seabed, drilled dans grouted piles into the seabed or other means used in the domain of offshore wind turbine like for example suctions buckets. Preferably the anchors 53 are permanently sealed on the seabed Sb to ensure the stability and mooring of the floating structure 3.

As shown in figure 2, the junction points 31 of the tendons 52 on the floating structure 3 are disposed on an inner virtual circle A. The center of this inner virtual circle A is preferably the relative center of the floating structure 3, for example where the mast of the turbine 4 is intended to be disposed.

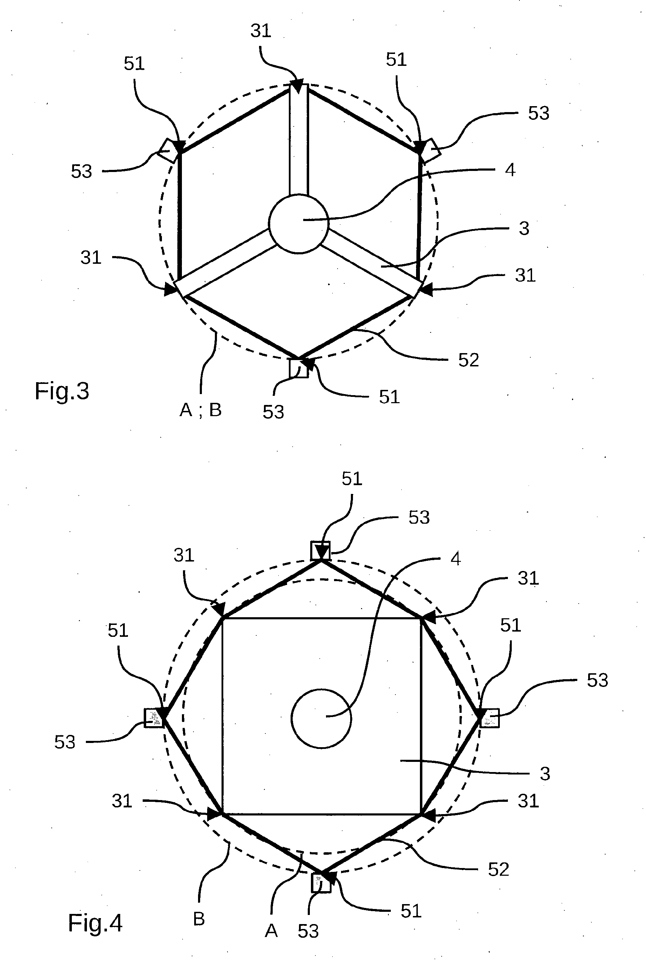

The tendons 52 are attached to the anchors 53 on mooring points 51. These mooring points 51 are disposed on an outer virtual circle B, coaxial with the inner virtual circle A. The diameter of the outer virtual circle B could be larger than (see figure 2) or equal (see figure 3) to the diameter of the inner virtual circle A.

This mooring configuration allows having a great stability of the floating structure 3 notably concerning the pitch or roll movements of the floating structure 3. Furthermore, by using a limited number of tendons 52, the costs remain controlled and reduced.

If the outer virtual circle B has a larger diameter than the inner virtual circle A, as shown in figure 2, the tendons 52 directed downwards, laterally and outwards from their junction points 31 as they descend towards their mooring points 51 and also outwards from the vertical under the floating structure 3 as they descend towards their mooring points 51. This configuration is particularly advantageous in order to increase even more the stability of the floating structure.

If the outer virtual circle B and the inner virtual circle A have an equal diameter, as shown in figure 3, the tendons 52 are directed downwards and laterally (along a virtual cylinder associated with the virtual circles A, B) under their junction points 31 as they descend towards their mooring points 51.

The diameter of the outer virtual circle B is calculated in order to have an optimum between the angle of inclination, the tension and the length of the tendons 52. This configuration allows to reduce the costs by limiting the length of the tendons 52.

Two adjacent tendons 52 of two adjacent anchors 53 may have a common junction point 31 with the floating structure 3. By common junction point 31, we mean that the junction points 31 of these adjacent tendons 52 of two adjacent anchors 53 are disposed in the same area of the floating structure 3 and only separated by a minimal distance induced by the assembly constraints.

Two tendons 52 of a same anchor 53 may have the same inclination with the vertical virtual plane C linking the mooring point 51 and the center of the floating structure, as shown in figure 1. This allows to have a balanced tension of these tendons 52 and of the floating structure 3 in general. The anchor 53 is then disposed on the seabed at equidistance of the two adjacent junction points 31 these two tendons 52 are attached to.

In order to have a good stability of the floating structure 3 in general, the mooring points 51 of the tendons 52 and the anchors 53 have preferably a regular distribution on the outer virtual circle B as shown in figures 2 and 3.

Also, in order to have a good stability of the floating structure 3 in general, the junction points 31 of the tendons 52 on the floating structure 3 have preferably a regular distribution on the inner virtual circle A.

In the examples of figures 1 to 3, the floating structure 3 has a triangular shape and comprises only three junction points 31 and in consequence three anchors 53. It is also possible to imagine a floating structure 3 having a different shape with more junction points 31, more anchors 53 and also more tendons 52. The figure 4 shows for example a square shaped floating structure 3 having four junction points 31 respectively at the corners of the square and four anchors 53. Other shapes are also possible.

The present invention also concerns an installation method of a floating structure 3 designed to receive a wind turbine 4.

This installation method comprises a first step of disposal of at least three anchors 53 on the seabed Sb and attaching at least two tendons 52 to each anchor 53 on dedicated mooring points 51. As mentioned above, the mooring points 51 are disposed on an outer virtual circle B. As mentioned above, the center of the outer virtual circle B is preferably the relative center of the floating structure 3, for example where the mast of the turbine 4 will be disposed. If the tendons 52 are for example metallic chains or metallic cables, it is possible to let them rest directly on the seabed Sb while waiting for the next steps of the installation method. If the tendons 52 are for example synthetic cables, a submerged buoy can be used to prevent the tendons 52 to rest directly on the seabed Sb while waiting for the next steps of the installation method.

During this first step of disposal of the anchors 53 on the seabed Sb, the anchors 53 are advantageously permanently sealed on the seabed Sb.

Still during this first step, the anchors 53 may be disposed in order that the mooring points 51 are disposed on the outer virtual circle B in a regular distribution.

The installation method comprises a second step of towing the floating structure 3 on site above the anchors 51 location.

This installation method comprises a third step of connection of the tendons 52 to the floating structure 3 on their dedicated junction points 31. As mentioned above, the junction points 31 are disposed on an inner virtual circle A coaxial with the outer virtual circle B. The inner virtual circle A has a smaller or equal diameter than the outer virtual circle B.

During this third step, the tendons 52 are also tensioned. Different methods to tense the tendons 52 are possible.

A first method could be to link firstly the tendons 52 to the floating structure 3 on their junction points 31 and then to tense the tendons 52 by known means.

A second method could be to sink the floating structure 3, for example with ballasts, to a first depth in order to link the tendons 52. After the tendons 52 are linked, the floating structure 3 is raised to a shallower depth, for example by emptying the ballasts, tensioning the tendons 52.

During this third step, two adjacent tendons 52 of two adjacent anchors 53 may have a common junction point 31 with the floating structure 3. The junction points 31 of the tendons 52 of a same anchor 53 may also be disposed on the floating structure 3 so that two tendons 52 of a same anchor 53 have the same inclination with the vertical virtual plane C linking the mooring point 51 and the center of the floating structure 3.

Still during this third step, two tendons 52 of a same anchor 53 may be disposed in order to have an angle with respect to each other of maximum 45° after connection on the floating structure 3. The junction points 31 of the tendons 52 on the floating structure 3 may also be disposed on the inner virtual circle A in a regular distribution.

## Claims

1. Floating structure (3) comprising a tensioned mooring system (5) intended to moor and stabilize the floating structure (3) to the seabed (Sb), preferably for an offshore wind turbine,
wherein the tensioned mooring system (5) comprises at least three independent anchors (53) disposed on the seabed (Sb) and at least two tendons (52) per anchors (53) linked to the floating structure (3), each tendon (52) of the same anchor (53) having a different junction point (31) with -the floating structure (3) so that the tendons (52) of the same anchor (53) are inclined on either side of a vertical plane (C) linking the anchor (53) and the center of the floating structure (3), the junction points (31) of the tendons (52) on the floating structure (3) being disposed on an inner virtual circle (A),
and wherein the tendons (52) are attached to the anchors (53) on mooring points (51) disposed on an outer virtual circle (B) coaxial with the inner virtual circle (A) and having a larger or equal diameter than the inner virtual circle (A).

2. Floating structure (3) according to claim 1, wherein two adjacent tendons (52) of two adjacent anchors (53) have a common junction point (31) on the floating structure (3).

3. Floating structure (3) according to anyone of the preceding claims, wherein the two tendons (52) of a same anchor (53) have the same inclination with the vertical virtual plane (C) linking the mooring point (51) and the center of the floating structure (3).

4. Floating structure (3) according to anyone of the preceding claims, wherein the mooring points (51) have a regular distribution on the outer virtual circle (B).

5. Floating structure (3) according to anyone of the preceding claims, wherein the junction points (31) of the tendons (52) on the floating structure (3) have a regular distribution on the inner virtual circle (A).

6. Floating structure (3) according to anyone of the preceding claims, wherein the anchors (53) are permanently sealed on the seabed (Sb).

7. Installation method of a floating structure (3), preferably for an offshore wind turbine, said method comprising the steps:
- disposing of at least three anchors (53) on the seabed (Sb) and attachment of at least two tendons (52) to each anchor (53) on dedicated mooring points (51), said mooring points (51) being disposed on an outer virtual circle (B),
- towing of the floating structure (3) on site above the anchors (51) location,
- connection of the tendons (52) to the floating structure (3) on dedicated junction points (31) and tensioning the tendons (52), said junction points (31) being disposed on an inner virtual circle (A) coaxial with the outer virtual circle (B) and having a smaller or equal diameter than the outer virtual circle (B).

8. Installation method according to claim 7, wherein two adjacent tendons (52) of two adjacent anchors (53) have a common junction point (31) with the floating structure (3).

9. Installation method according to anyone claims 7 or 8, wherein the junction points (31) of the tendons (52) of a same anchor (53) are disposed on the floating structure (3) so that two tendons (52) of a same anchor (53) have the same inclination with a vertical virtual plane (C) linking the mooring point (51) and the center of the floating structure (3).

10. Installation method according to anyone of the claims 7 to 9, wherein the two tendons (52) of a same anchor (53) have an angle with respect to each other of maximum 45° after connection on the floating structure (3).

11. Installation method according to anyone of claims 7 to 10, wherein the mooring points (51) are disposed on the outer virtual circle (B) in a regular distribution.

12. Installation method according to anyone of claims 7 to 11, wherein the junction points (31) of the tendons (52) on the floating structure (3) are disposed on the inner virtual circle (A) in a regular distribution.

13. Installation method according to anyone of claims 7 to 12, wherein the anchors (53) are permanently sealed on the seabed (Sb) during the step of disposal of the anchors (53) on the seabed (Sb).
